# EUROPEAN PATENT APPLICATION

(11) **EP 1 701 460 A1**
(43) Date of publication of application: **13.09.2006**
(21) Application number: 05290538.7
(22) Date of filing: 09.03.2005
(51) Int. Cl.: H04J 3/06, H04L 25/14, H04L 29/06

(54) **Method of converting a serial data stream to data lanes**

(71) Applicant: ALCATEL, 75008 Paris (FR)
(72) Inventor: Wedding, Berthold, 70825 Korntal-Münchingen (DE)
(74) Representative: Kohler Schmid Möbus

(57) **Abstract**

In a method of converting a serial data stream into a parallel data stream in a communications interface, wherein the serial data stream is demultiplexed to a given number of lanes (11 -14) and a sync header (24 - 27) is prepended to at least one data block (20 - 23) of at least one lane (11 - 14), for at least one lane (11 - 14) a sync word containing one or more bits, excluding the static word 01 as sync header, is given or generated and at least part of the sync word is used as sync header (24 - 27), which is prepended to the at least one data block (20 - 23). This allows for improved de-skewing.

## Description

### Background of the invention

The invention relates to a method of converting a serial data stream into a parallel data stream in a communications interface, wherein the serial data stream is demultiplexed to a given number of lanes and a sync header is prepended to at least one data block of at least one data lane.

The SERDES Framer Interface (SFI) defines an electrical interface between a SONET/SDH Framer (or other devices, e.g. a forward-error-correction (FEC) processor) and the high speed Parallel-to-Serial/Serial-to-Parallel (SERDES) logic. Serial data received by a first chip is converted into parallel data signals, transferred in parallel to a second chip. The transmission lines (carrying the data of each lane) between the chip may have different lengths, hence the transmission time may vary between lanes. In the second chip the parallel data must be serialized again, putting the received parallel data into the correct order. Due to the different transmission times skew occurs between the parallel signals. In order to detect the skew and to be able to concatenate parallel signals in the correct order, static two bit sync headers with the bit sequence 01 are presently used for all the data blocks of all the lanes.

For example, according to the SERDES Framer Interface Level 4 (SFI-4) Phase 2 data in the optical stream is scrambled and 64-bit data block striped across the 4 bit lanes of the receive data bus in a round-robin fashion. The first 64-bits received are written into the buffer associated with RXDATA[3] and the last into that associated with RXDATA[0]. The buffers act as a set of FIFOs to bridge between the input timing domain and the receive interface timing domain. A 01 sync header is prepended on each 64-bit data block to construct a 66-bit block prior to transmission, i.e. transmission from a first chip to a second chip.

With a static 01 sync header being used together with 64 bit data blocks, the 01 bit sequence occurs periodically every 64 bits. In the second chip the sync header has to be recognized. Unfortunately, a 01 bit sequence occurs quite often and hence there is a uncertainty, whether a recognized 01 sequence corresponds to a sync header. In order to alleviate this problem, the data is scrambled prior to transmission. Additionally, if the skew is more than 32 bits, ambiguities may occur. Hence, according to the state of the art, only small skew may be detected and corrected.

### Object of the invention

It is the object of the invention to provide a method for converting serial data stream signals into parallel signals in a parallel data interconnection for high bitrate signals.

### Short description of the invention

This object is achieved by a method of the aforementioned type, wherein for at least one lane a sync word containing one or more bits, excluding the word 01 as static sync header, is given or generated and used as sync header, which is prepended to the at least one data block. Especially, it is advantageous to spread the sync word over several sync headers prepending several data blocks. This allows choosing a longer sync word as is known in the state of the art. With a longer sync word, ambiguities may be avoided and much larger skew may be detected and the signals be corrected accordingly. Furthermore, a two-bit sync word in combination with a one-bit sync header may be used, wherein 0 and 1 alternate, i.e. a first data block has a 0-bit prepended as sync header an the next data block of the same lane has a 1-bit prepended as sync header. Hence, with 64 bit data blocks the periodicity is increased to 2 x 65 bits, i.e. 130 bits, allowing for larger skew to be detected unambiguously. Hence, the detectable skew range may be increased. Obviously the main advantage is in using longer sync words, i.e. having a length of 3 bits or more, wherein the length of the sync word determines the skew which may be detected unambiguously. Depending on the application and the expected skew the length of the sync word may be chosen. Preferably, a sync header is prepended to each data block of each lane.

In a preferred variant of the method, the sync word is spread over one or more sync headers, e.g. by prepending one bit of the sync. word to each data block. Thus, ambiguities can be avoided.

In a further variant of the method, the sync header may contain several sync header blocks, each block containing a given number of bits of the sync word. Alternatively, each block may contain the entire sync word.

In a particularly preferred variant o the inventive method, the sync word is a pseudorandom bit sequence. The pseudorandom bit sequence may be generated by linear feedback shift registers . When pseudorandom bit sequences are used, scrambling of the data may become obsolete because the probability of the pseudorandom bit sequence occurring in a data block is extremely low, hence the probability of a part of a data block being mistakenly recognized as sync header is low. Hence, the detection of the sync word is more reliable even if he signal is not scrambled. Depending of the length of the pseudorandom sync word, the detectable skew range may be increased by orders of magnitude. Preferably, the sync word is very long, e.g. 2^23-1 = 8388607 bits.

The implementation of the method is particularly easy, if the same sync word is used in all the lanes. However, a sync word and thus a data block may be associated with a certain lane if different sync words are used in the different lanes. Hence, different sync words may be given or generated for at least two lanes. The sync words may be given or generated by one or several sync word generators.

In a further variant of the method the same sync header may be used for each data block of a specific lane. Alternatively, at least for two data blocks of a lane following one another different sync headers may be used. For example, if the sync word only contains two bits, 0 and 1 may be used alternately as sync header for the data blocks of a specific lane. Furthermore, it is possible to use for example 01, 10, 11, 00 as sync headers for four consecutive data blocks of a lane. Hence, varying, dynamic sync headers may be used.

The invention also relates to an interface, in particular a SERDES source interface, comprising a gearbox for deserializing a serial data stream and several data lanes comprising means for prepending a sync header to the data blocks, wherein a sync word generator is provided, generating a sync word for at least one lane. The sync word generator may provide sync words for all the lanes. Buffers may be provided for the data blocks upstream of the means for prepending sync headers to the data blocks, wherein the sync headers are derived from the sync word(s) by means for deriving the sync headers from the sync word.

Preferably, the sync word generator is embodied to generate pseudorandom bit sequences as sync words. For each lane a separate sync word generator may be provided. Advantageously, means for header extraction and de-skewing are provided on the chip receiving the parallel data which was prepended with a sync headers derived from a sync word prior to transmission.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.
- Fig. 1: shows schematically an SFI interface.

- Fig. 2: shows in a highly schematic fashion the conversion of a serial data stream into a parallel data stream.
- Fig. 3: shows an embodiment with an alternating bit sequence as sync header.

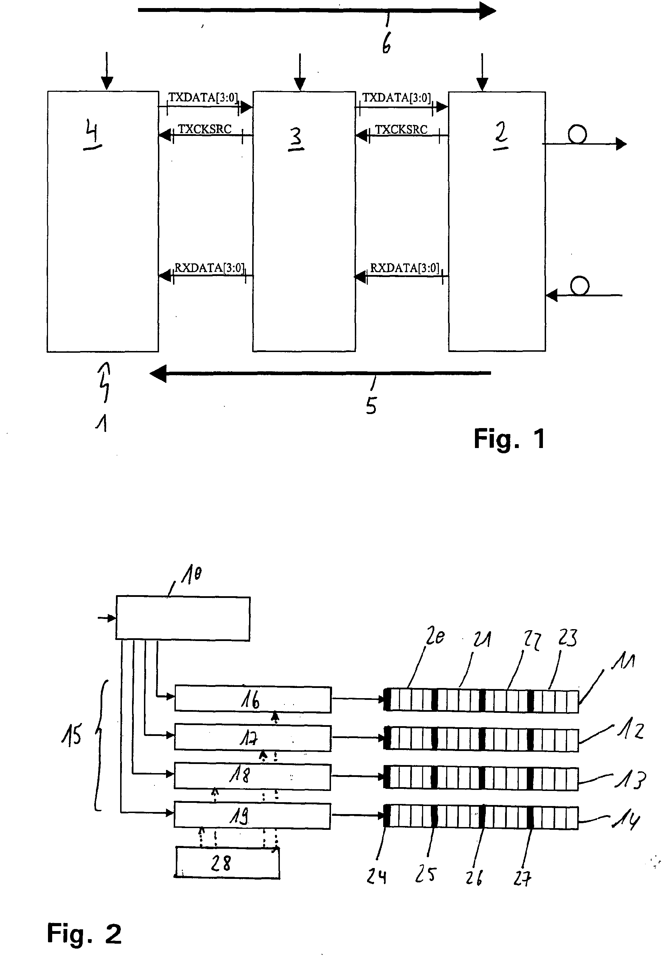

A general block diagram of an SFI interface 1 is shown in Figure 1. It is the interface between a SERDES component 2, a forward-error-correction (FEC) processor 3, and a framer 4. Data flow in the optics-to-system direction is indicated by arrow 5, and in the system-to-optics direction by arrow 6, respectively. Data transfer between the SERDES component 2 and the FEC processor 3 as well as between the FEC processor 3 and the framer 4 is accomplished by means of parallel signals RXDATA[3:0] (receive signals). Data transfer in the opposite direction (transmit signals) is also accomplished by parallel signals TXDATA[3:0].

The part of the SFI interface shown in Fig. 2 is, for example, implemented in the SERDES component 2. An incoming serial data stream is inputted to a gearbox 10, where the serial data stream is demultiplexed to 4 bit lanes 11 - 14 of the receive data bus 15 in a round-robin fashion. The lanes 11 - 14 comprise fixed length, in particular 64-bit, data blocks. In each lane 11 - 14 a sync header is prepended to each data block by sync header prepending means 16 - 19. The sync headers may be a sync word or part of a sync word. In Fig. 2 four data blocks 20 - 23 are shown per lane 11 - 14. The sync headers (sync words or parts of a long sync word, e.g. individual bits of a sync word) are indicated by numerals 24 - 27. In the embodiment, the sync headers 24 - 27 are derived from a sync word generated as a pseudorandom bit sequence in a sync word generator 28. The serial signal received by the gearbox 10 may be scrambled before being inputted to the gearbox 10. After the gearbox 10 the data blocks may be buffered in buffers, in particular in FIFO registers.

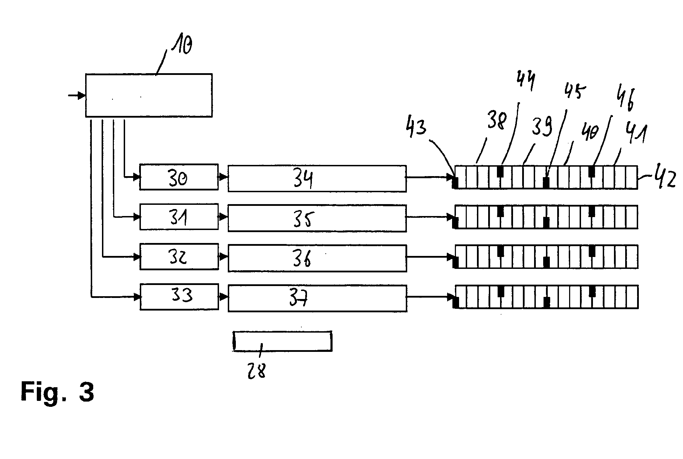

The embodiment of Fig. 3 differs from that of Fig. 2 in that the data blocks extracted from the serial data stream in gearbox 10 are buffered in buffers 30 - 33. Then the data blocks are prepended with alternating bits as sync headers by sync header prepending means 34 - 37. Hence, data blocks 38, 40 of lane 42 are prepended with a 0 bit as sync header 43, 45 and data blocks 39, 41 are prepended with a 1 bit as sync header 44, 46.

## Claims

1. Method of converting a serial data stream into a parallel data stream in a communications interface, wherein the serial data stream is demultiplexed to a given number of lanes (11 -14, 42) and a sync header (24 - 27, 43 - 46) is prepended to at least one data block (20 - 23, 38 - 41) of at least one lane (11 - 14, 42), **characterized in that** for at least one lane (11 - 14, 42) a sync word containing one or more bits, excluding the word 01 as static sync header, is given or generated and at least a part of the sync word is used as sync header (24 - 27, 43 - 46), which is prepended to the at least one data block (20 - 23), 38 - 41).

2. Method according to claim 1, **characterized in that** the sync word is spread over one or more sync headers (24 - 27, 43 - 46).

3. Method according to claim 1, **characterized in that** the sync header contains several sync header blocks, each block containing a given number of bits of the sync word or each block containing the sync word.

4. Method according to claim 1, **characterized in that** the sync word is a pseudorandom bit sequence.

5. Method according to claim 1, **characterized in that** the same sync word is used in all the lanes (11 - 14, 42).

6. Method according to claim 1, **characterized in that** a different sync word is given or generated for at least two lanes (11 - 14, 42), in particular for each lane (11 - 14, 42).

7. Method according to claim 1, **characterized in that** the same sync header is used for each data block (20 - 23, 38 - 41) of a specific lane (11 - 14, 42).

8. Method according to claim 1, **characterized in that** at least for two data blocks (38 - 41) of a lane (42) following one another different sync headers are used.

9. Interface, in particular SERDES source interface, comprising a gearbox (10) for deserializing a serial data stream and several data lanes (11 - 14, 42) comprising means for prepending a sync header (24 - 27, 43 - 46) to the data blocks (20 - 23, 38 - 41), **characterized in that** a sync word generator (28) is provided, generating a sync word for at least one lane (11 - 14, 42), wherein means for deriving the sync headers from the sync word are also provided.

10. Interface according to claim 9, **characterized in that** the sync word generator (28) is a pseudorandom bit sequence generator.

11. Interface according to claim 9, **characterized in that** a sync word generator (28) is provided for each lane (11 - 14, 42).
